# EUROPEAN PATENT APPLICATION

(11) **EP 4 732 657 A1**
(43) Date of publication of application: **29.04.2026**
(21) Application number: 24867410.3
(22) Date of filing: 18.09.2024
(51) Int. Cl.: A01D 34/00, A01D 69/00

(54) **STAND-ON LAWN MOWER**

(30) Priority: 20.09.2023 CN 202311221998; 20.09.2023 CN 202322566947 U; 20.09.2023 CN 202311219369; 20.09.2023 CN 202311219476
(71) Applicant: Nanjing Chervon Industry Co., Ltd., Nanjing, Jiangsu 211106 (CN)
(72) Inventor: WEI, Tianfang, Nanjing, Jiangsu 211106 (CN); LI, Li, Nanjing, Jiangsu 211106 (CN); SHANG, Zhuxian, Nanjing, Jiangsu 211106 (CN)
(74) Representative: Sun, Yiming
(86) International application number: PCT/CN2024/119285
(87) International publication number: WO 2025/061002

(57) **Abstract**

Provided is a stand-on mower. The stand-on mower includes a mowing assembly including a mowing element for implementing a mowing function; a pair of drive rods configured at least for the user to operate to have at least a first position at which the drive rods open to both sides and a second position at which the drive rods close toward the center; a traveling assembly including front traveling wheels and rear traveling wheels; a drive assembly including at least a first electric motor configured to drive the traveling assembly; a power supply device configured to supply power to at least the first electric motor; a control assembly configured to control the operation of at least the first electric motor; and a display screen with a display plane. The projection of the drive rods at the second position on a first plane at least partially overlaps the projection of the display plane on the first plane. The first plane is parallel to the ground plane where the traveling assembly is located.

## Description

This application claims priority to Chinese Patent Application No. 202311221998.3 filed with the China National Intellectual Property Administration (CNIPA) on Sep. 20, 2023, Chinese Patent Application No. 202322566947.6 filed with the CNIPAon Sep. 20, 2023, Chinese Patent Application No. 202311219369.7 filed with the CNIPAon Sep. 20, 2023, and Chinese Patent Application No. 202311219476.X filed with the CNIPA on Sep. 20, 2023, the disclosures of which are incorporated herein by reference in their entireties.

### TECHNICAL FIELD

The present application relates to a garden tool, for example, a stand-on mower.

### BACKGROUND

A mower is a common mowing device with high efficiency, which is easy to operate. Electric stand-on mowers are gradually replacing conventional gasoline-powered stand-on mowers, and the electric stand-on mowers and the conventional gasoline-powered stand-on mowers are operated in substantially the same manners. In the related art, the position at which the display screen is disposed is not optimal, and the connection structure between the drive rod and the operating platform can only support the drive rod to rotate along the front and rear direction of the mower.

This part provides background information related to the present application, and the background information is not necessarily the existing art.

### SUMMARY

An object of the present application is to solve or at least alleviate part or all of the preceding problems. Therefore, an object of the present application is to provide a stand-on mower that improves the user experience by providing a display screen while ensuring compact structures on an operating platform.

To achieve the preceding object, the present application adopts the technical solutions below. A stand-on mower includes a mowing assembly including a mowing element for implementing a mowing function; a traveling assembly including front traveling wheels and rear traveling wheels and configured to support the stand-on mower on a ground plane; a drive assembly including a first electric motor configured to drive the traveling assembly; a standing platform having at least one standing plane configured to support a user; a pair of drive rods configured for the user to operate to have a first position at which the drive rods open to both sides and a second position at which the drive rods close toward the center; and a display screen including a display plane. When the drive rods are at the second position, a projection of the drive rods on a first plane at least partially overlaps a projection of the display plane on the first plane, where the first plane is basically parallel to the ground plane.

In some examples, when the pair of drive rods are at the first position, the projection of the drive rods on the first plane does not overlap the projection of the display plane on the first plane.

In some examples, a control assembly is further included, where the control assembly is configured to allow a current to flow from a power supply device to the first electric motor when detecting at least a first signal and a second signal in sequence, where the first signal indicates that the drive rods switch from the second position to the first position, and the second signal indicates that the drive rods switch from the first position to the second position.

In some examples, a position detection device is further included, where the position detection device is configured to detect the position of the drive rods and transmit a position signal of the drive rods to the control assembly.

In some examples, opening and closing structures are further included, where an opening and closing structure of the opening and closing structures is configured to at least support a drive rod of the drive rods to switch between the first position and the second position.

In some examples, the opening and closing structure includes a first bracket, a lower end of the drive rod is rotatably connected to the first bracket through a first rotary shaft, an axis of the first rotary shaft is a first axis, the first axis extends along a front and rear direction of the stand-on mower, and the drive rod is rotatable left and right about the first axis.

In some examples, a U-shaped bracket is disposed at the lower end of the drive rod, a portion of the first bracket is inserted into the U-shaped bracket, and the first rotary shaft passes through one sidewall of the U-shaped bracket, the first bracket, and the other sidewall of the U-shaped bracket.

In some examples, the opening and closing structure further includes a second bracket, the first bracket and the second bracket are rotatably connected through a second rotary shaft, an axis of the second rotary shaft is a second axis, the second axis extends along a left and right direction of the stand-on mower, and the drive rod is rotatable forward and backward about the second axis.

In some examples, the opening and closing structure further includes two elastic members, the two elastic members are each in a compressed state and are disposed between the first bracket and the second bracket, and the two elastic members are distributed on two sides of the second axis along the front and rear direction of the stand-on mower.

**In** some examples, a power supply device is further included, where the power supply device includes at least one battery pack detachably mounted on the stand-on mower.

In some examples, the display screen is configured to display at least a state of the first electric motor, a state of a power supply device, and a state of the mowing element.

In some examples, an opening and closing plane in which the drive rods switch between the first position and the second position is basically parallel or perpendicular to the display plane.

In some examples, the display screen has at least the first display brightness and the second display brightness.

In some examples, the display screen has a touch function.

A stand-on mower includes a mowing assembly including a mowing element for implementing a mowing function; a traveling assembly including front traveling wheels and rear traveling wheels; a drive assembly including at least a first electric motor configured to drive the traveling assembly; a standing platform having at least one standing plane configured to support a user; a control assembly configured to control the operation of at least the first electric motor; drive rods configured for the user to operate to have at least a first position at which the drive rods open to both sides and a second position at which the drive rods close toward the center on an opening and closing plane; and a display screen with a display plane. The opening and closing plane is basically parallel or perpendicular to the display plane.

In some examples, when the drive rods are at the second position, a projection of the drive rods on a first plane at least partially overlaps a projection of the display plane on the first plane, where the first plane is basically parallel to a ground plane.

In some examples, when a pair of drive rods are at the first position, the projection of the drive rods on the first plane does not overlap the projection of the display plane on the first plane.

The present application further discloses the technical solutions below. A stand-on mower includes a mowing assembly including a mowing element for implementing a mowing function; a central control mechanism including an operating platform configured for a user to operate to control the stand-on mower; a traveling assembly including front traveling wheels and rear traveling wheels; a drive assembly including at least a first electric motor configured to drive the traveling assembly; a standing platform having at least one standing plane configured to support an operator; and a balancing device connected to the standing platform and at least configured to adjust the posture of the standing platform so that when the stand-on mower is on a slope, the standing plane can support the operator basically vertically upward.

In some examples, the standing platform includes two separate pedals that are spaced apart along the left and right direction of the stand-on mower, and the balancing device can adjust the heights of the two separate pedals.

In some examples, the balancing device includes a support, a connecting rod, and two dampers, the support is fixedly disposed on the vehicle frame, the middle part of the connecting rod is rotatably supported by the support, two ends of the connecting rod are connected to the two separate pedals, respectively, the two dampers are in one-to-one correspondence with the two separate pedals, one end of the damper is connected to the vehicle frame, and the other end of the damper is connected to the pedal.

In some examples, the connecting rod is V-shaped, and a V-shaped opening of the connecting rod faces upward.

In some examples, the support is a leaf spring.

In some examples, the standing platform is an integral pedal, and the balancing device can adjust the tilt angle of the integral pedal along the left and right direction of the stand-on mower.

In some examples, the balancing device includes a support plate and two side plates, the support plate is fixedly disposed on the vehicle frame, the integral pedal is located above the support plate, the two side plates are connected between the integral pedal and the support plate, the integral pedal, the support plate, and the two side plates are combined to form a trapezoidal structure, and at least one side plate is rotatable relative to the support plate and the integral pedal.

In some examples, a vehicle posture detection device is disposed on the support plate and configured to identify the posture of the stand-on mower and control the side plate to rotate according to the posture of the stand-on mower.

In some examples, both side plates are rotatable relative to the support plate and the integral pedal; initially, the degrees of freedom of the side plates are locked; when the vehicle posture detection device detects that the side tilt angle of the stand-on mower exceeds a set tilt angle, the degrees of freedom of the side plates are released.

In some examples, only one side plate is rotatable relative to the support plate and the integral pedal, and the rotation of the side plate is adjusted by an active adjustment mechanism; when the vehicle posture detection device detects that the stand-on mower tilts, the active adjustment mechanism controls the angle of rotation of the side plate in real time according to the side tilt angle of the stand-on mower.

In some examples, the vehicle posture detection device is a gyroscope sensor.

The present application further discloses the technical solutions below. A support system for a stand-on working machine is provided. The stand-on working machine includes a traveling assembly including front traveling wheels and rear traveling wheels; and a drive assembly including at least a first electric motor configured to drive the traveling assembly. The support system includes a standing platform including at least one standing plane configured to support an operator; and a balancing device connected to the standing platform and at least configured to adjust the posture of the standing platform so that the standing plane can support the operator basically vertically upward.

The present application further discloses the technical solutions below. A stand-on mower includes a vehicle frame; a mowing assembly mounted to the vehicle frame and including a mowing element for implementing a mowing function; a traveling assembly including front traveling wheels and rear traveling wheels; a drive assembly including at least a first electric motor configured to drive the traveling assembly; a standing platform configured to support an operator; and a counterweight device including at least a counterweight movable relative to the vehicle frame. The counterweight device is configured to adjust the position of the counterweight based on the weight of the operator on the standing platform.

In some examples, a weight measuring device is further included and configured to measure the weight of the operator on the standing platform.

In some examples, the weight measuring device is disposed on the standing platform.

In some examples, a drive assembly is further included and configured to drive the counterweight to move relative to the vehicle frame.

In some examples, the drive assembly includes a driving electric motor, a leadscrew, and a guide limiting rod. The leadscrew and the guide limiting rod are in parallel. The counterweight is slidably connected to the guide limiting rod and threadedly connected to the leadscrew. The driving electric motor is configured to drive the leadscrew to rotate, thereby driving the counterweight to move along the axial direction of the guide limiting rod.

In some examples, the direction of movement of the counterweight is consistent with the front and rear direction of the stand-on mower.

In some examples, a prompting device is further included and configured to issue an alarm prompt when the center of gravity of the stand-on mower is offset.

The present application further discloses the technical solutions below. A stand-on mower includes a vehicle frame; a mowing assembly mounted to the vehicle frame and including a mowing element for implementing a mowing function; a traveling assembly including front traveling wheels and rear traveling wheels; a drive assembly including at least a first electric motor configured to drive the traveling assembly; a standing platform configured to support an operator; a counterweight device including at least a counterweight movable relative to the vehicle frame; and a center of gravity offset determination portion configured to acquire a center of gravity offset signal of the stand-on mower. The counterweight device is configured to automatically adjust the position of the counterweight based on the center of gravity offset signal.

In some examples, the direction of movement of the counterweight is consistent with the front and rear direction of the stand-on mower.

The present application further discloses the technical solutions below. A stand-on working machine includes a vehicle frame; a traveling assembly including front traveling wheels and rear traveling wheels; a drive assembly including at least a first electric motor configured to drive the traveling assembly; a standing platform configured to support an operator; a counterweight device including at least a counterweight movable relative to the vehicle frame; and a center of gravity offset determination portion configured to acquire a center of gravity offset signal of the stand-on mower. The counterweight device is configured to automatically adjust the position of the counterweight based on the center of gravity offset signal.

The present application further discloses the technical solutions below. A stand-on mower includes a mowing assembly including a mowing element for implementing a mowing function; a central control mechanism including an operating platform configured for a user to operate to control the stand-on mower; a traveling assembly including front traveling wheels and rear traveling wheels; a drive assembly including at least a first electric motor configured to drive the traveling assembly; and an operating member disposed on the operating platform and configured for an operator to hold with one hand to control at least the traveling direction and traveling speed of the stand-on mower.

In some examples, the traveling direction of the stand-on mower includes forward, backward, left turn, and right turn.

In some examples, the operating member is rotatably disposed on the operating platform, the stand-on mower can be controlled to advance by rotating the operating member forward, the stand-on mower can be controlled to retreat by rotating the operating member backward, the stand-on mower can be controlled to turn left by rotating the operating member to the left, and the stand-on mower can be controlled to turn right by rotating the operating member to the right.

In some examples, the forward traveling speed or the backward traveling speed of the stand-on mower and the turning radius during left steering or right steering can be controlled by adjusting the extent to which the operating member is rotated forward, backward, to the left, or to the right.

In some examples, the operating member includes a straight rod portion, and the lower end of the straight rod portion is rotatably connected to the operating platform.

In some examples, the operating member further includes a ball head portion disposed at the upper end of the straight rod portion.

In some examples, a support member is further disposed on the operating platform and configured to support the hand of the operator.

In some examples, the support member and the operating member are spaced apart along the left and right direction of the stand-on mower.

In some examples, the support member is L-shaped.

In some examples, a controller is further included and configured to output control instructions based on actions on the operating member, where the control instructions include an advance/retreat instruction, a turn instruction, and a zero-turn instruction.

The present application further discloses the technical solutions below. A stand-on working machine includes a central control mechanism including an operating platform configured for an operator to operate to control the stand-on working machine; a traveling assembly including front traveling wheels and rear traveling wheels; a drive assembly including at least a first electric motor configured to drive the traveling assembly; and an operating member disposed on the operating platform and configured for the operator to hold with one hand to control at least the traveling direction and traveling speed of the stand-on mower.

### BRIEF DESCRIPTION OF DRAWINGS

FIG. 1 is a structural view of a stand-on mower according to the present application.
FIG. 2 is a schematic view of some structures of the stand-on mower in FIG. 1.
FIG. 3 is a structural view of an operating portion involved in some examples of the present application.
FIG. 4 is a structural view of an operating portion involved in some other examples of the present application.
FIG. 5A is a schematic view illustrating the first position and the second position of a pair of drive rods in the present application.
FIG. 5B is a structural view of an opening and closing structure involved in FIG. 4.
FIG. 6 is a structural view of a standing platform and a balancing device involved in some examples of the present application.
FIG. 7 is a structural view of the balancing device involved in FIG. 6.
FIG. 8 is a structural view of a standing platform and a balancing device involved in some other examples of the present application.
FIG. 9 is a structural view of a vehicle frame and a counterweight device involved in the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned units.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

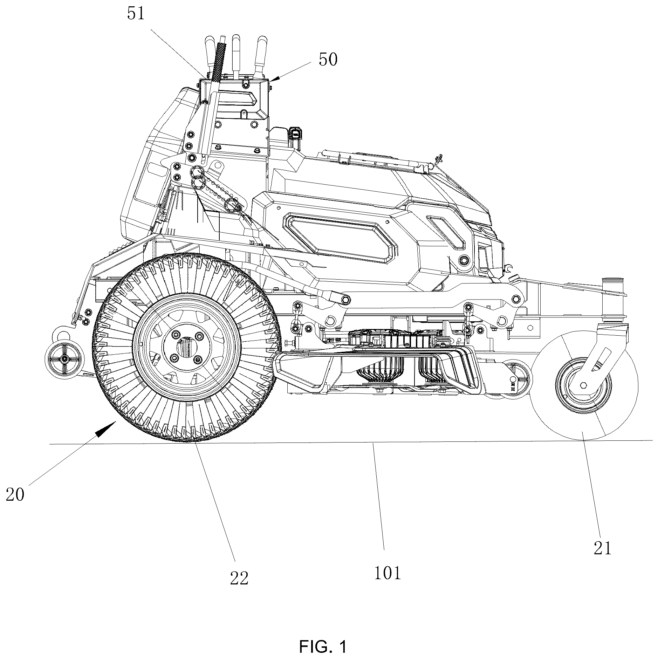

As shown in FIGS. 1 to 9, the present application provides a stand-on mower. The stand-on mower includes a vehicle frame 10, a traveling assembly 20 mounted on the vehicle frame 10, a mowing assembly 30, a drive assembly, a power supply device 40, a central control mechanism 50, a support mechanism, a balancing device 70, and a counterweight device 80. It is to be noted that, in addition to the stand-on mower, the relevant technical solutions in the present application are applicable to other stand-on working machines such as a stand-on snow thrower and a stand-on cleaning machine.

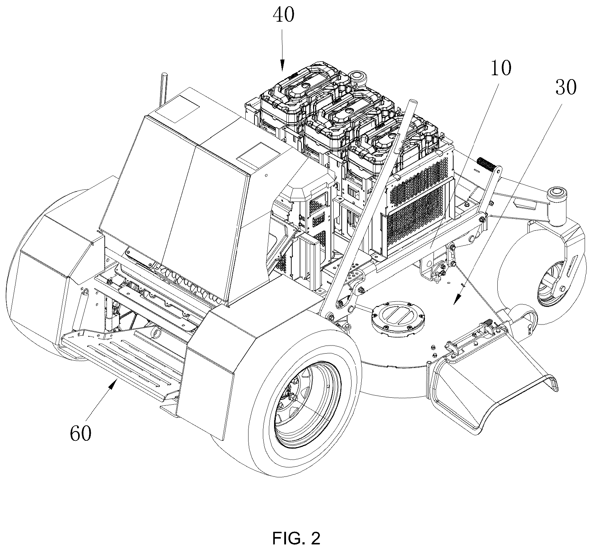

Referring to FIGS. 1 and 2, the traveling assembly 20 includes a pair of front traveling wheels 21 and a pair of rear traveling wheels 22. Optionally, the front traveling wheels 21 are configured to be caster wheels, and the drive assembly drives the rear traveling wheels 22 to rotate. Of course, when the rear traveling wheels 22 are configured to be caster wheels, the drive assembly drives the front traveling wheels 21 to rotate. The mowing assembly 30 includes a mowing element for implementing a mowing function. Optionally, the mowing assembly 30 is mounted at the bottom of the vehicle frame 10 and at least partially located between the front traveling wheels 21 and the rear traveling wheels 22 in the front and rear direction. The drive assembly is configured to drive the traveling assembly 20 and the mowing assembly 30 to operate. Optionally, the drive assembly includes a first electric motor configured to drive the traveling assembly 20 to operate and a second electric motor configured to drive the mowing assembly 30 to operate. In some examples, one or more first electric motors are provided, or one or more second electric motors are provided. In some examples, the first electric motor may be a hub motor or a wheel-side motor. The power supply device 40 includes one or more battery packs configured to supply power to at least the first electric motor or the second electric motor. In some examples, at least one of the multiple battery packs is detachably mounted to a coupling portion of the stand-on mower. In some examples, the coupling portion includes a battery compartment. Optionally, the multiple battery packs are configured to be detachable from the stand-on mower to supply power to a power tool. Specifically, the power tool may be a garden tool, such as a string trimmer, a blower, a push mower, or a riding mower. The power tool may be a handheld power tool, such as a string trimmer, a snow thrower, or a push mower. The power tool may be a hand-push power tool, such as a push snow thrower or a push mower. The power tool may be a drilling tool, a sawing tool, or an electric garden tool.

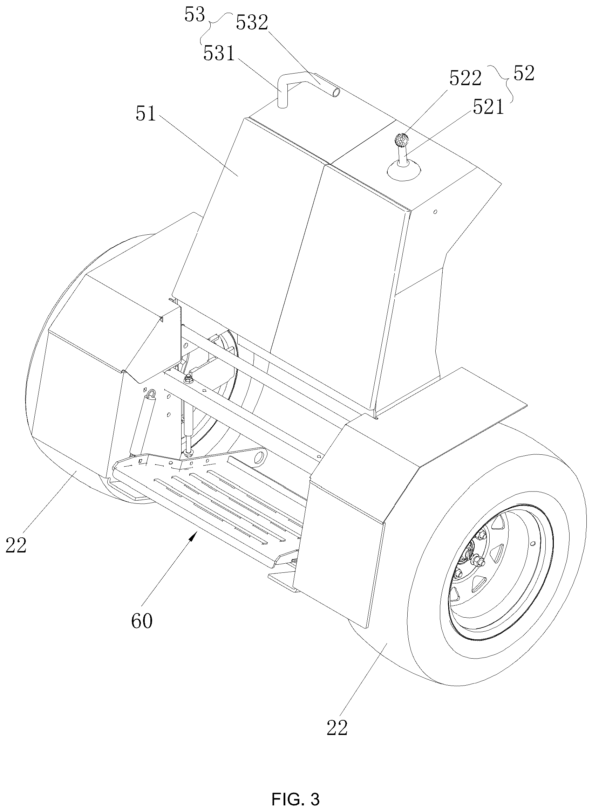

The central control mechanism 50 includes a control assembly configured to control the operation of at least the first electric motor and the second electric motor. The central control mechanism 50 further includes an operating platform 51 configured for the user to operate to control the stand-on mower. An operating portion is disposed on the operating platform 51 and configured for the user to hold to control at least the traveling direction and traveling speed of the stand-on mower. The traveling direction of the stand-on mower includes forward, backward, left turn, and right turn. Referring to FIG. 3, the operating portion includes an operating member 52 configured for the user to hold with one hand to control at least the traveling direction and traveling speed of the stand-on mower. Optionally, the operating member 52 includes a straight rod portion 521, and the lower end of the straight rod portion 521 is rotatably connected to the operating platform 51. To facilitate user grip, the operating member 52 further includes a ball head portion 522 disposed at the upper end of the straight rod portion 521. The user may hold the ball head portion 522 with one hand to operate the operating member 52. For example, the user can control the stand-on mower to advance by rotating the operating member 52 forward, can control the stand-on mower to retreat by rotating the operating member 52 backward, can control the stand-on mower to turn left by rotating the operating member 52 to the left, and can control the stand-on mower to turn right by rotating the operating member 52 to the right. In some examples, the forward traveling speed or the backward traveling speed of the stand-on mower can be controlled by adjusting the extent to which the operating member 52 is rotated forward or backward. In some examples, the angle at which the stand-on mower turns left or right can be controlled by adjusting the extent to which the operating member 52 is rotated to the left or to the right. In some examples, the control assembly can output control instructions based on actions on the operating member 52, where the control instructions include an advance/retreat instruction, a turn instruction, and a zero-turn instruction.

In some examples, a support member 53 is further disposed on the operating platform 51 and configured to support the hand of the user. The operating portion includes only one operating member 52 configured for the user to hold with one hand to control at least the traveling direction and traveling speed of the stand-on mower so that the other hand of the user can always hold the support member 53 to maintain body balance without the need to switch hands, thereby simplifying the operation. In some examples, the support member 53 and the operating member 52 are spaced apart along the left and right direction of the stand-on mower, which is ergonomic and makes it easier for the user to hold the operating member 52 with one hand and the support member 53 with the other hand. In some examples, the support member 53 is L-shaped and includes a first vertical portion 531 and a first horizontal portion 532, one end of the first vertical portion 531 facing away from the first horizontal portion 532 is fixedly connected to the operating platform 51, and the first horizontal portion 532 extends toward the operating member 52. In this manner, gripping by the user can be facilitated, and the distance between two hands can be shortened, making the operation more comfortable.

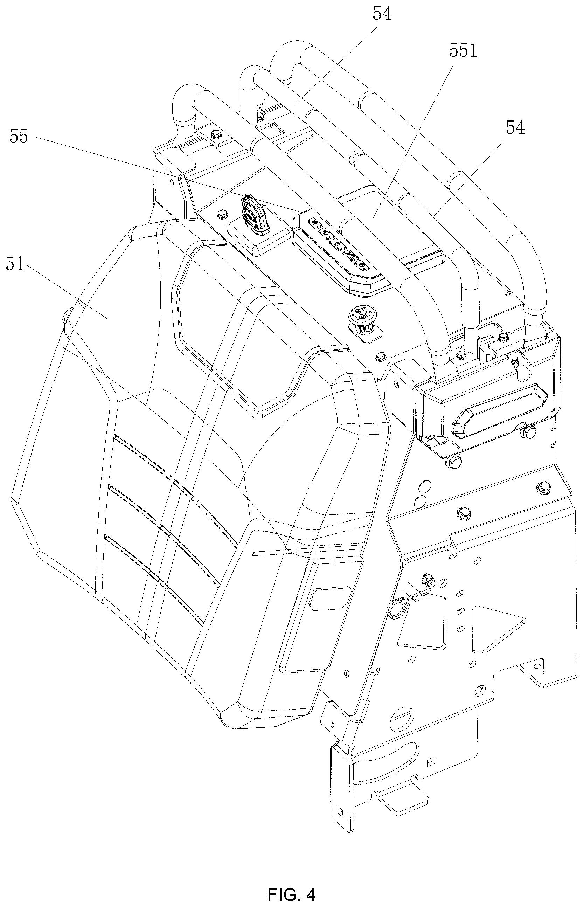

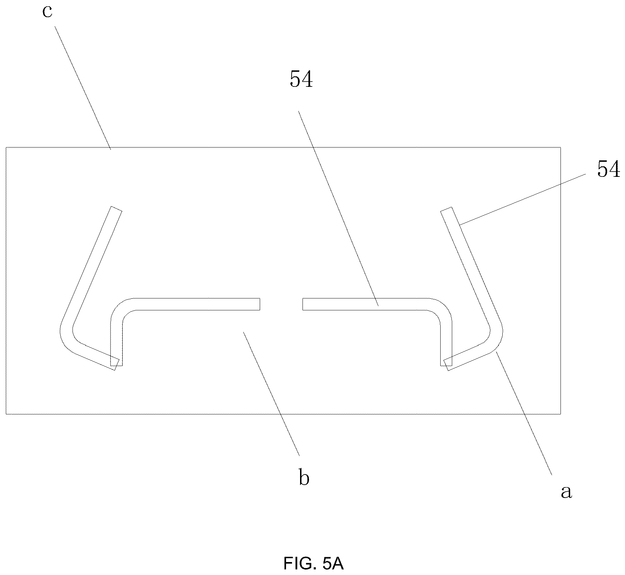

In some examples, as shown in FIG. 4, the operating portion includes a pair of drive rods 54 configured for the user to hold with two hands to control at least the traveling direction and traveling speed of the stand-on mower. Optionally, the pair of drive rods 54 are L-shaped and each include a second vertical portion 541 and a second horizontal portion 542, the two second vertical portions 541 are rotatably disposed on the operating platform 51, and the two second horizontal portions 542 extend toward each other. The user may hold the two second horizontal portions 542 with two hands to operate the pair of drive rods 54. In some examples, the user can control the stand-on mower to advance by simultaneously rotating the pair of drive rods 54 forward, can control the stand-on mower to retreat by simultaneously rotating the pair of drive rods 54 backward, can control the stand-on mower to turn left by rotating only the left drive rod 54 forward, and can control the stand-on mower to turn right by rotating only the right drive rod 54 forward. In some examples, the user can control the traveling speed of the stand-on mower by adjusting the amplitudes of rotation of the drive rods 54. In some examples, the control assembly can output control instructions based on actions on the drive rods 54, where the control instructions include an advance/retreat instruction, a turn instruction, and a zero-turn instruction. Referring to FIG. 5A, the pair of drive rods 54 are further configured for the user to operate to have at least a first position a and a second position b; at the first position a, the pair of drive rods 54 open to both sides; and at the second position b, the pair of drive rods 54 close toward the center. The control assembly is configured to allow the current to flow from the power supply device 40 to the first electric motor when detecting at least a first signal and a second signal in sequence, where the first signal indicates that the operation rods switch from the second position to the first position, and the second signal indicates that the drive rods switch from the first position to the second position. In this manner, safe startup can be achieved, and the following problem can be avoided: the user unintentionally touches the drive rods 54 to cause the stand-on mower to travel suddenly.

In some examples, a user interface is further disposed on the operating platform 51 and includes a display screen 55 having a display plane 551. The projection of the drive rods 54 at the second position onto a first plane 101 at least partially overlaps the projection of the display plane onto the first plane. In some examples, the display plane is basically parallel or perpendicular to the first plane. The first plane is basically parallel to the ground plane where the traveling assembly 20 is located. In some examples, the drive rods are configured for the user to operate to have at least the first position at which the drive rods open to both sides and the second position at which the drive rods close toward the center on an opening and closing plane c. The opening and closing plane is basically parallel or perpendicular to the display plane. The opening and closing plane refers to the plane in which the pair of drive rods 54 switch between the first position and the second position. When the pair of drive rods 54 are at the first position, that is, when the drive rods 54 open, the display screen 55 can be operated. In this manner, the structures on the operating platform 51 are more compact without affecting an operation on the display screen 55. In some examples, when the pair of drive rods 54 are at the first position, the projection of the drive rods 54 onto the first plane does not overlap the projection of the display plane onto the first plane. In some examples, the display screen is configured to display at least the state of the first electric motor, the state of the power supply device, and the state of the mowing element.

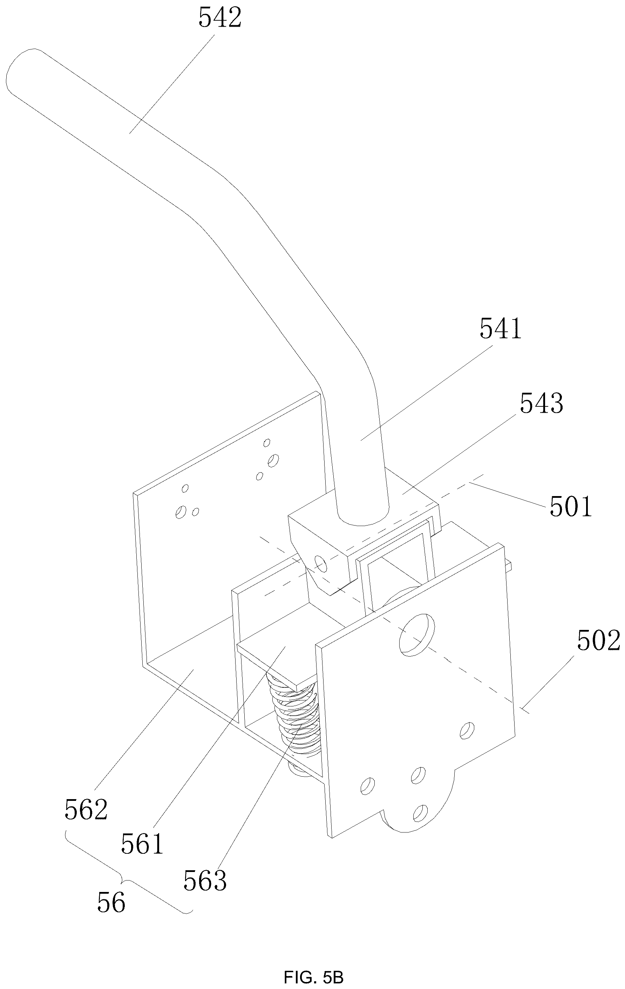

Referring to FIG. 5B, the drive rod 54 is disposed on the operating platform 51 through an opening and closing structure 56, and the opening and closing structure 56 is configured to support the drive rod 54 to rotate along the front and rear direction of the stand-on mower, thereby controlling the traveling direction and traveling speed of the stand-on mower. The opening and closing structure 56 is further configured to support the drive rod 54 to rotate along the left and right direction of the stand-on mower so that the drive rod 54 can switch between the first position and the second position. Optionally, the opening and closing structure 56 includes a first bracket 561, and the lower end of the drive rod 54 is rotatably connected to the first bracket 561 through a first rotary shaft. The axis of the first rotary shaft is a first axis 501, the first axis 501 extends along the front and rear direction of the stand-on mower, and the drive rod 54 is rotatable left and right about the first axis 501 so that the drive rod 54 can switch between the first position and the second position. In some examples, a U-shaped bracket 543 is disposed at the lower end of the drive rod 54, and a portion of the first bracket 561 is inserted into the U-shaped bracket 543. The first rotary shaft passes through one sidewall of the U-shaped bracket 543, the first bracket 561, and the other sidewall of the U-shaped bracket 543, thereby achieving a stable connection between the drive rod 54 and the first bracket 561. The opening and closing structure 56 further includes a second bracket 562, the first bracket 561 and the second bracket 562 are rotatably connected through a second rotary shaft, the axis of the second rotary shaft is a second axis 502, the second axis 502 extends along the left and right direction of the stand-on mower, and the drive rod 54 is rotatable forward and backward about the second axis 502, thereby controlling the traveling direction and traveling speed of the stand-on mower. Optionally, the opening and closing structure 56 further includes two elastic members 563, the two elastic members 563 are each in a compressed state and are disposed between the first bracket 561 and the second bracket 562, and the two elastic members 563 are distributed on two sides of the second axis 502 along the front and rear direction of the stand-on mower. When the user operates the drive rod 54 to rotate forward and backward, the elastic members 563 can provide a certain damping effect, thereby facilitating the operation.

As shown in FIGS. 1 and 2, the support mechanism includes a standing platform 60, and the standing platform 60 has a standing plane configured to support the user. The standing platform 60 is disposed at the rear of the vehicle frame 10, connected to the vehicle frame 10, and located between the two rear traveling wheels 22. In some examples, the standing platform 60 is partially located between the two rear traveling wheels 22, and one end of the standing platform 60 facing the front traveling wheels 21 is located between the axial centerline of the front traveling wheels 21 and the axial centerline of the rear traveling wheels 22. In this manner, when the user stands on the standing platform 60, the center of gravity of the human body is located at the center of the axial centerline of the rear traveling wheels 22 of the stand-on mower so that when the stand-on mower rotates, the radius of rotation of the user is zero, no centrifugal force is generated, and no risk of the user being thrown off eixts. In addition, the standing platform 60 moves forward, and the center of gravity of the human body also moves forward accordingly so that no matter whether the mower is climbing a slope or passing over bumpy ground, safety can be ensured and a rollover is less likely to happen.

The balancing device 70 is connected to the standing platform 60 and configured to adjust the posture of the standing platform 60 relative to the stand-on mower so that the standing plane always supports the user basically vertically upward, that is, when the posture of the standing plane relative to the stand-on mower changes, the position of the standing plane relative to the stand-on mower is changed. When the stand-on mower operates on a slope, the left and right wheels of the stand-on mower are at different heights, causing the stand-on mower and the standing platform 60 to tilt. In this case, the balancing device 70 can adjust the posture of the standing platform 60 along the left and right direction of the stand-on mower so that the user can still stand stably on the standing platform 60.

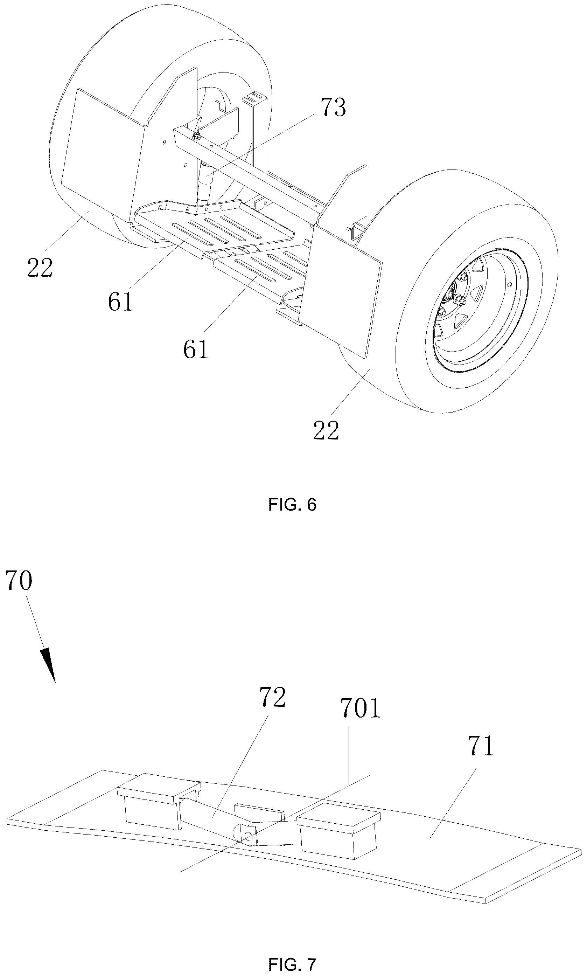

Referring to FIGS. 6 and 7, in some examples, the standing platform 60 includes two separate pedals 61 that are spaced apart along the left and right direction of the stand-on mower, and the balancing device 70 can adjust the heights of the two separate pedals 61. When the stand-on mower tilts, the balancing device 70 can automatically adjust the heights of the two separate pedals 61 according to the gravitational forces exerted by the user's feet, thereby maintaining the stability of the user in a standing posture. Optionally, the balancing device 70 includes a support 71, a connecting rod 72, and two dampers 73, the support 71 is fixedly disposed on the vehicle frame 10, the middle part of the connecting rod 72 is rotatably supported by the support 71, the axis of rotation of the connecting rod 72 is a third axis 701, two ends of the connecting rod 72 are connected to the two separate pedals 61, respectively, the two dampers 73 are in one-to-one correspondence with the two separate pedals 61, one end of the damper 73 is connected to the vehicle frame 10, and the other end of the damper 73 is connected to the pedal 61. The structure formed by connecting the connecting rod 72 to the two separate pedals 61 is similar to the structure of a seesaw. When one of the separate pedals 61 moves downward, the other pedal 61 moves upward accordingly. When the stand-on mower tilts, the gravitational force of the user causes one of the separate pedals 61 to move downward, while the connecting rod 72 drives the other pedal 61 to move upward so that the user can still stand upright when the mower travels on a slope. The connecting rod 72 is V-shaped, and an opening of the connecting rod 72 faces upward so that the rotation of the connecting rod 72 is not interfered with by the support 71. The support 71 is a leaf spring for providing a buffering force for the standing platform 60, making it more comfortable for the user to stand on the standing platform 60.

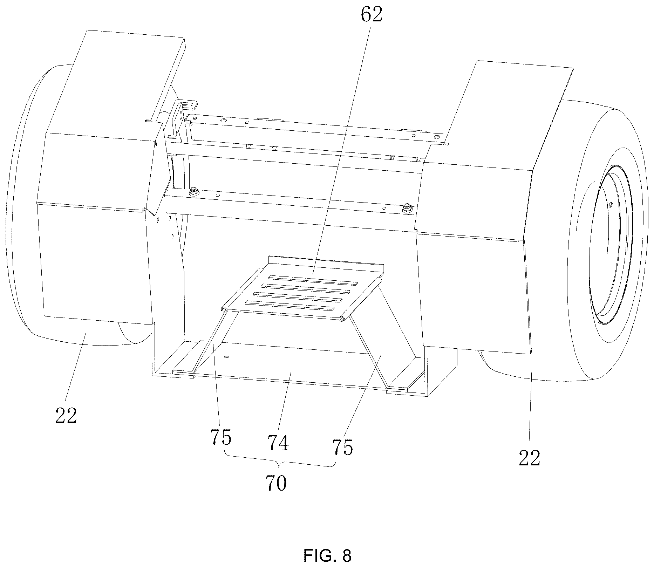

Referring to FIG. 8, in some examples, the standing platform 60 is an integral pedal 62, and the balancing device 70 can adjust the tilt angle of the integral pedal 62 along the left and right direction of the stand-on mower. Optionally, the balancing device 70 includes a support plate 74 and two side plates 75, the support plate 74 is fixedly disposed on the vehicle frame 10, the integral pedal 62 is located above the support plate 74, the two side plates 75 are connected between the integral pedal 62 and the support plate 74, the integral pedal 62, the support plate 74, and the two side plates 75 are combined to form a trapezoidal structure, and at least one side plate 75 is rotatable relative to the support plate 74 and the integral pedal 62 to adjust the tilt angle of the integral pedal 62. A vehicle posture detection device is disposed on the support plate 74 and configured to identify the posture of the stand-on mower and control the side plate 75 to rotate according to the posture of the stand-on mower. The vehicle posture detection device is a gyroscope sensor.

The integral pedal 62 is adjusted in two manners. In the first manner, both side plates 75 are rotatable relative to the support plate 74 and the integral pedal 62; initially, the degrees of freedom of the side plates 75 are locked; when the vehicle posture detection device detects that the side tilt angle of the stand-on mower exceeds a set tilt angle, the degrees of freedom of the side plates 75 are released, and the integral pedal 62 swings freely under the action of the gravitational force of the user so that the user can stand upright stably. In the second manner, only one side plate 75 is rotatable relative to the support plate 74, the rotation of the side plate 75 is adjusted by an active adjustment mechanism, the active adjustment mechanism may be configured to be an electric motor combined with a turbine worm structure, the worm gear is disposed on an output shaft of the electric motor, the worm is connected to the side plate 75, the turbine worm structure can convert the rotation of the electric motor into the rotation of the side plate 75, and the turbine worm structure has a self-locking function so that the side plate 75 can be locked at an angle. Of course, the above is just an example. The structure of the adjustment mechanism is not limited to this. Any structure that can drive the side plate 75 to rotate and has a locking function is feasible. When the vehicle posture detection device detects that the stand-on mower tilts, the active adjustment mechanism controls the angle of rotation of the side plate 75 in real time according to the side tilt angle of the stand-on mower and then adjusts the angle of the integral pedal 62 so that the user can stand upright stably.

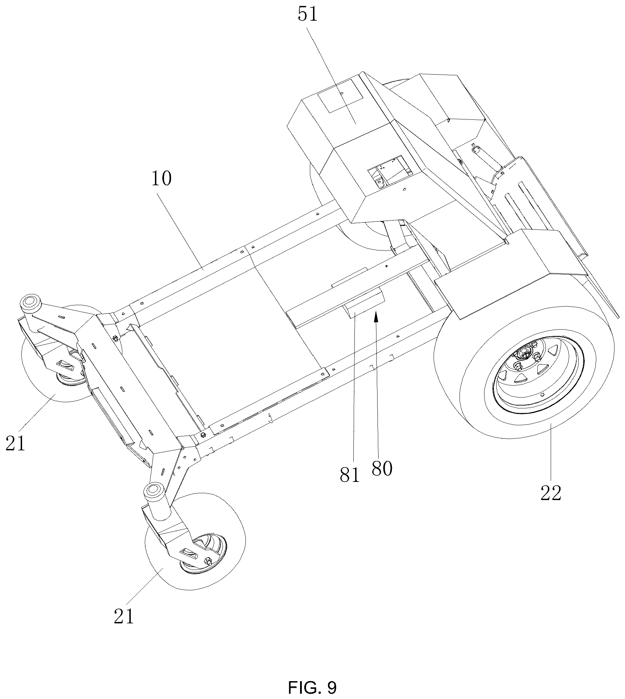

Referring to FIG. 9, the counterweight device 80 includes at least a counterweight 81 that is movable relative to the vehicle frame 10. The direction of movement of the counterweight 81 is consistent with the front and rear direction of the stand-on mower. The counterweight device 80 is configured to adjust the position of the counterweight 81 based on the weight of the user on the standing platform 60, thereby adjusting the center of gravity of the stand-on mower and ensuring a reasonable distribution of the loads on the front and rear axles. Optionally, a center of gravity offset determination portion is further included and configured to acquire a center of gravity offset signal of the stand-on mower, and the counterweight device 80 is configured to automatically adjust the position of the counterweight 81 based on the center of gravity offset signal.

The stand-on mower further includes a prompting device configured to issue an alarm prompt when the center of gravity of the stand-on mower is offset.

The weight of the user is measured by a weight measuring device disposed on the standing platform 60. The counterweight 81 is driven by the drive assembly to move. The drive assembly includes a driving electric motor, a leadscrew, and a guide limiting rod. The leadscrew and the guide limiting rod are in parallel. The counterweight 81 is slidably connected to the guide limiting rod and threadedly connected to the leadscrew. The driving electric motor is configured to drive the leadscrew to rotate, thereby driving the counterweight 81 to move along the axial direction of the guide limiting rod. The preceding structure of the drive assembly is merely illustrative and is not limited thereto.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A stand-on mower, comprising:
a mowing assembly comprising a mowing element for implementing a mowing function;
a traveling assembly comprising front traveling wheels and rear traveling wheels and configured to support the stand-on mower on a ground plane;
a drive assembly comprising a first electric motor configured to drive the traveling assembly;
a standing platform having at least one standing plane configured to support a user;
a pair of drive rods configured for the user to operate to have a first position at which the drive rods open to both sides and a second position at which the drive rods close toward a center; and
a display screen comprising a display plane;
wherein when the drive rods are at the second position, a projection of the drive rods on a first plane at least partially overlaps a projection of the display plane on the first plane, and the first plane is basically parallel to the ground plane.

2. The stand-on mower of claim 1, wherein when the pair of drive rods are at the first position, the projection of the drive rods on the first plane does not overlap the projection of the display plane on the first plane.

3. The stand-on mower of claim 1, further comprising a control assembly, wherein the control assembly is configured to allow a current to flow from a power supply device to the first electric motor when detecting at least a first signal and a second signal in sequence, the first signal indicates that the drive rods switch from the second position to the first position, and the second signal indicates that the drive rods switch from the first position to the second position.

4. The stand-on mower of claim 3, further comprising a position detection device, wherein the position detection device is configured to detect a position of the drive rods and transmit a position signal of the drive rods to the control assembly.

5. The stand-on mower of claim 1, further comprising opening and closing structures, wherein an opening and closing structure of the opening and closing structures is configured to at least support a drive rod of the drive rods to switch between the first position and the second position.

6. The stand-on mower of claim 5, wherein the opening and closing structure comprises a first bracket, a lower end of the drive rod is rotatably connected to the first bracket through a first rotary shaft, an axis of the first rotary shaft is a first axis, the first axis extends along a front and rear direction of the stand-on mower, and the drive rod is rotatable left and right about the first axis.

7. The stand-on mower of claim 6, wherein a U-shaped bracket is disposed at the lower end of the drive rod, a portion of the first bracket is inserted into the U-shaped bracket, and the first rotary shaft passes through one sidewall of the U-shaped bracket, the first bracket, and another sidewall of the U-shaped bracket.

8. The stand-on mower of claim 6, wherein the opening and closing structure further comprises a second bracket, the first bracket and the second bracket are rotatably connected through a second rotary shaft, an axis of the second rotary shaft is a second axis, the second axis extends along a left and right direction of the stand-on mower, and the drive rod is rotatable forward and backward about the second axis.

9. The stand-on mower of claim 8, wherein the opening and closing structure further comprises two elastic members, the two elastic members are each in a compressed state and are disposed between the first bracket and the second bracket, and the two elastic members are distributed on two sides of the second axis along the front and rear direction of the stand-on mower.

10. The stand-on mower of claim 1, further comprising a power supply device, wherein the power supply device comprises at least one battery pack detachably mounted on the stand-on mower.

11. The stand-on mower of claim 1, wherein the display screen is configured to display at least a state of the first electric motor, a state of a power supply device, and a state of the mowing element.

12. The stand-on mower of claim 1, wherein an opening and closing plane in which the drive rods switch between the first position and the second position is basically parallel or perpendicular to the display plane.

13. The stand-on mower of claim 1, wherein the display screen has at least first display brightness and second display brightness.

14. The stand-on mower of claim 1, wherein the display screen has a touch function.

15. A stand-on mower, comprising:
a mowing assembly comprising a mowing element for implementing a mowing function;
a traveling assembly comprising front traveling wheels and rear traveling wheels;
a drive assembly comprising at least a first electric motor configured to drive the traveling assembly;
a standing platform having at least one standing plane configured to support a user;
a control assembly configured to control operation of at least the first electric motor;
drive rods configured for the user to operate to have at least a first position at which the drive rods open to both sides and a second position at which the drive rods close toward a center on an opening and closing plane; and
a display screen with a display plane;
wherein the opening and closing plane is basically parallel or perpendicular to the display plane.

16. The stand-on mower of claim 15, wherein when the drive rods are at the second position, a projection of the drive rods on a first plane at least partially overlaps a projection of the display plane on the first plane, and the first plane is basically parallel to a ground plane.

17. The stand-on mower of claim 16, wherein when a pair of drive rods are at the first position, the projection of the drive rods on the first plane does not overlap the projection of the display plane on the first plane.
